# EUROPEAN PATENT SPECIFICATION

(11) **EP 3 090 858 B1**
(45) Date of publication and mention of the grant of the patent: **04.07.2018**
(21) Application number: 16154241.0
(22) Date of filing: 04.02.2016
(51) Int. Cl.: B23C 3/00, B23C 3/12, B23C 3/30, B23D 45/04, B23D 45/14, B23Q 39/02, B29C 65/02, E06B 3/96

(54) **DOUBLE-HEAD CUTTING SAW WITH AUTOMATIC PROCESSING FUNCTION**
DOPPELKOPFSCHNITTSÄGE MIT AUTOMATISCHER VERARBEITUNGSFUNKTION
SCIE DE COUPE À DOUBLE TÊTE AVEC FONCTION DE TRAITEMENT AUTOMATIQUE

(30) Priority: 13.04.2015 CN 201510169463
(43) Date of publication of application: 09.11.2016
(73) Proprietor: Taicang Wegoma Machinery Co., Ltd., Taicang Jiangsu 215400 (CN)
(72) Inventor: LIU, Haitao, Taicang, Jiangsu 215400 (CN); ZHANG, Zhilong, Taicang, Jiangsu 215400 (CN); DONG, Ming, Taicang, Jiangsu 215400 (CN)
(74) Representative: Hanna Moore + Curley

(56) References cited:
- WO-A1-2010/133910
- WO-A1-2013/132406
- WO-A1-2014/118728
- CN-U- 203 356 728
- US-A1- 2007 199 187
- US-A1- 2012 060 662

## Description

### Field of the Invention

The present invention relates to the field of deep processing of uPVC section bars and the field of processing of doors, windows and curtain walls, and in particular to a double-head cutting saw with an automatic processing function and a processing application of the double-head cutting saw.

### Background of the Invention

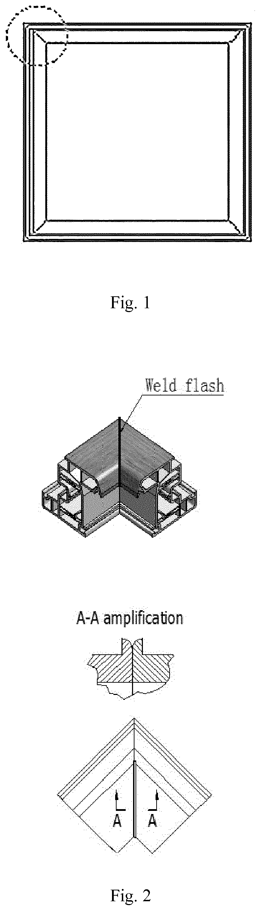

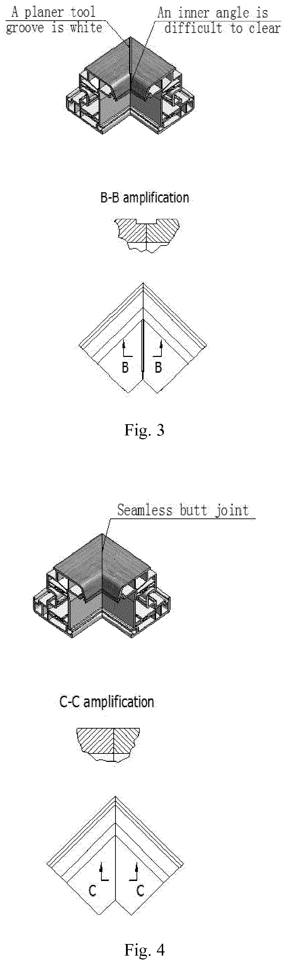

In the industry of doors, windows and curtain walls, a traditional process for uPVC doors and windows (as shown in Fig.1) is as follows: feeding and cutting a section bar, milling a drainage channel, a lock hole and the like, welding connection opposite angles of the section bar, clearing angles and assembling; and in the welding process of the connection opposite angles of the section bar in the traditional process, welding flux at a weld softens and overflows to form an outward protruding weld flash at a seam (as shown in Fig.2); an angle clearance procedure is carried out after the welding is completed, the angle clearance procedure refers to removing the welded weld flash by using a milling cutter or a planer tool to achieve a smooth and beautiful outline, however, the process has the defect that the processing track of removing the weld flash is very obvious, and a white groove will be left after the weld flash is removed; and in particular, for a lot of imitation wood-grain materials or materials with patterns on surfaces, a white processing groove line is formed at the joint, which breaks the overall beautiful appearance of doors and windows (as shown in Fig.3) .

The following are representative of the state of the Art:
Chinese Patent Publication No. CN 203 356 728U discloses a dual-head composite angle cutting saw, wherein accurate length cutting of sectional materials is arranged through the setting of a fixed head and a movable head; and composite multi-angle cutting of a saw blade is realized through the setting of a saw blade angling mechanism, a saw blade lifting mechanism and a rotary swivel bearing in the fixed and movable heads.

United States Patent Publication No. US2012/060662A1 discloses an automated stick cutting system adapted to produce stick-frame construction components from material for building construction. The disclosed stick cutting system has a frame having an in-feed portion and an out-feed portion. A saw is adapted to cut the material, the saw being coupled to the frame. An in-feed drive is coupled to the frame, the in-feed drive adapted to accept the material from the in-feed portion and feed the material to the saw. A position detector is coupled to the frame, the position detector adapted to track a position of the material relative to the in-feed drive. An out-feed drive is adapted to accept the material uncut from the in-feed drive, the out-feed drive adapted to accept the material cut from the saw and feed cut material to the out-feed portion. An edge detector is adapted to detect a leading edge of the material when being fed to the saw by the in-feed drive. The position detector and the edge detector cooperate with operation of the saw to meter lengths of the material through the in-feed drive and to cut a predetermined length of the material with the saw.

### Summary of the Invention

The present invention relates to a double-head cutting saw with an automatic processing function, which is applied to the angle clearance-free welding method for uPVC doors and windows for processing a groove on the outer contour of a section bar. The double-head cutting saw includes a fixed saw head and a movable saw head; processing centers are arranged in both the fixed saw head and the movable saw head, so that the fixed saw head and the movable saw head can simultaneously process the outer contour of the end face of the section bar; each processing center includes an X direction bottom plate, an X direction servo motor and feed screw nut, an X direction guide rail and slide block, a Y direction bottom plate, a Y direction guide rail and slide block, a Y direction servo motor and feed screw nut, a Z direction bottom plate, a Z direction servo motor and feed screw nut, a Z direction guide rail and slide block, a sliding plate and a power head and cutter; the power head and cutter is installed on the sliding plate; the X direction guide rail and slide block is installed on the X direction bottom plate; the X direction servo motor and feed screw nut drives the sliding plate to move in an X direction under the guide of the X direction guide rail and slide block; the Y direction bottom plate is installed under the X direction bottom plate; the Y direction guide rail and slide block is installed on the Y direction bottom plate; the Y direction servo motor and feed screw nut drives the sliding plate to move in a Y direction under the guide of the Y direction guide rail and slide block; the Z direction bottom plate is installed on the side face of the Y direction bottom plate; the Z direction guide rail and slide block is installed on the Z direction bottom plate; and the Z direction servo motor and feed screw nut drives the sliding plate to move in a Z direction under the guide of the Z direction guide rail and slide block.

In the present invention, the processing center adopts three-axis (X, Y and Z axes) coordinated control, has an interpolation function and can process various curves, so as to mill the outer contour lines of different section bars.

The double-head cutting saw provided by the present invention includes a lathe bed, the fixed saw head, the movable saw head, an electric box and a control device; the fixed saw head is fixed at one end of the lathe bed, and the movable saw head moves along a slide rail on the lathe bed; the control device is connected with the electric box, a command sent by the control device is transmitted to the fixed saw head and the movable saw head through the electric box to control the start, stop and movement of the fixed saw head and the movable saw head; each one of the fixed saw head and the movable saw head includes a saw cutting center, the processing center, a locating and clamping mould and a worktable; the locating and clamping mould clamps and fixes a section bar needing to be processed on the worktable, and the saw cutting center horizontally saws and cuts the end face of the section bar; the processing center mills the outer contour of the cut end face of the section bar; the cutter in the power head and cutter is perpendicular to a saw blade in the saw cutting center, and when cutting at different angles, the cutter is consistently perpendicular to the cut surface.

In the present invention, since each one of the fixed saw head and the movable saw head includes the saw cutting center and the processing center, saw cutting and milling are located and completed at one time, moreover, double saw heads are adopted in the present invention, both ends of the saw heads can be simultaneously cut, no re-locating is necessary in the entire processing procedure of the section bar, secondary clamping is avoided, and cutting and outer contour milling are completed at one time, so that the procedures are greatly saved, the processing accuracy is high, and the defective percentage is low.

The control device in the present invention includes an operation box and/or a computer control console. The operation of the double-head cutting saw can be semi-automatic by only adopting the operation box, or be subjected to full-automatic control by the coordinated control of the operation box and the computer control console, or be subjected to entire process control by directing adopting the computer control console.

The fixed saw head and the movable saw head in the present invention have the same structure.

The present invention further discloses a processing method of the double-head cutting saw with the automatic processing function, the processing method aims at length cutting and outer contour line milling steps of the section bar, and the specific steps of the method are as follows:
(1) inputting a sectional view of a section bar to be cut into the control device, actively extracting the outer contour of the section bar to be cut through a computing center in the control device, and generating an outer contour processing procedure of the double-head cutting saw;
(2) starting the double-head cutting saw for saw cutting, and locating and pressing the section bar on the worktable through the locating and clamping mould in the double-head cutting saw, wherein the entire cutting off, saw cutting and end face milling process of the section bar is located at a pressed state;
(3) cutting: using the saw cutting center to cut the section bar into a section bar conforming to a required length, then removing scrap materials dropping in the cutting process of the section bar and the remaining uncut material having entire segments, only retaining the section bar conforming to the length requirement and having an end face to be further processed, and leaving a corresponding space for the participation of the processing center for subsequent processing;
(4) cutting the outer contour of the end face: driving the power head and cutter in the processing center to move along the outer contour line of the section bar by means of the servo motors and the feed screw nuts to mill the outer contour of the end face;
(6) loosening the locating and clamping mould after cutting the outer contour of the end face, and taking out the material; and
(7) feeding the material again, and repeating the above process.

In the present invention, the processing of the double-head cutting saw achieves cutting of the outer contour and plays an important role in the entire process, no weld flash is formed only when the outer contour is slightly lower than the internal structure, and the achievement of the process is guaranteed.

### Beneficial Effects:

Compared with the prior art, the present invention has the following advantages:
The present invention provides a double-head cutting saw with the automatic processing function, the double-head cutting saw removes a part of material from the outer contour of the cut surface in a cutting and blanking process, so that cutting and outer contour processing are completed at one time, secondary clamping is avoided, and the processing accuracy and the production efficiency are greatly improved.

### Brief Description of the Drawings

Fig.1 is a schematic diagram of a structure of UPVC door and window, in which a welding angle is circled by dotted lines.
Fig.2 is a sample angle of a welding angle with a weld flash after welding.
Fig.3 is a sample angle of the welding angle after weld flash removal.
Fig.4 is an angle clearance-free welding effect of the welding angle after the welding method facilitated by the saw of the present invention is carried out.
Fig.5 is a perspective diagram of a section bar to be processed.
Fig.6 is a 45° sectional view of the section bar to be processed; and a part marked by an oblique line is an outer contour 7.
Fig.7 is a schematic diagram of a structure of a double-head saw in the embodiment.
Fig.8 is a schematic diagram of a structure of a movable saw head of the double-head saw in the embodiment.
Fig.9 is a schematic diagram of a structure of a processing center in the double-head saw in the embodiment.

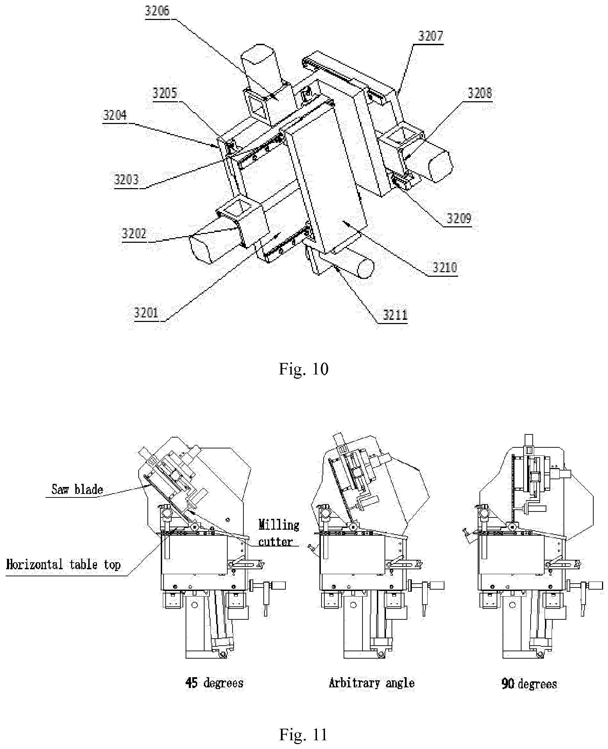

Fig.10 is another schematic diagram of a structure of the processing center in the double-head saw in the embodiment.
Fig.11 is a schematic diagram of angle change of a saw head in the embodiment.

In the figures: 1. lathe bed; 2. fixed saw head; 3. movable saw head; 4. electric box; 5. operation box; 6. computer control console; 7. outer contour of section bar; 31. saw cutting center; 32. processing center; 33. locating and clamping mould; 34. section bar; 3201. X direction bottom plate; 3202. X direction servo motor and feed screw nut; 3203. X direction guide rail and slide block; 3204. Y direction bottom plate; 3205. Y direction guide rail and slide block; 3206. Y direction servo motor and feed screw nut; 3207. Z direction bottom plate; 3208. Z direction servo motor and feed screw nut; 3209. Z direction guide rail and slide block; 3210. sliding plate; 3211. power head and cutter.

### Detailed Description of the Embodiments

The present invention will be further illustrated below in combination with the accompanying drawings and specific embodiments.

### Embodiment

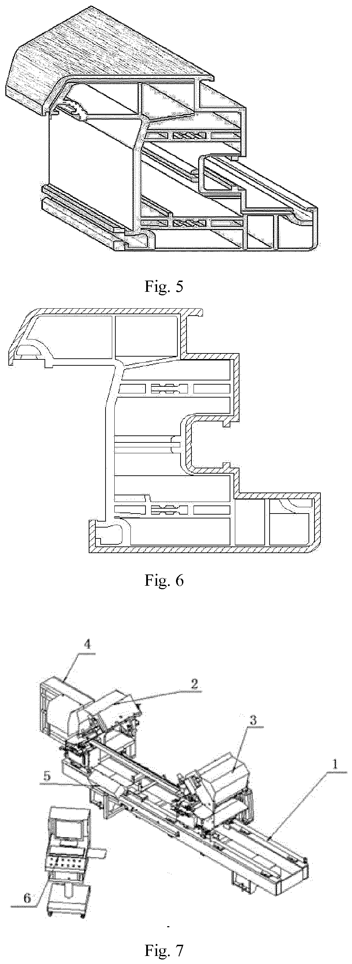

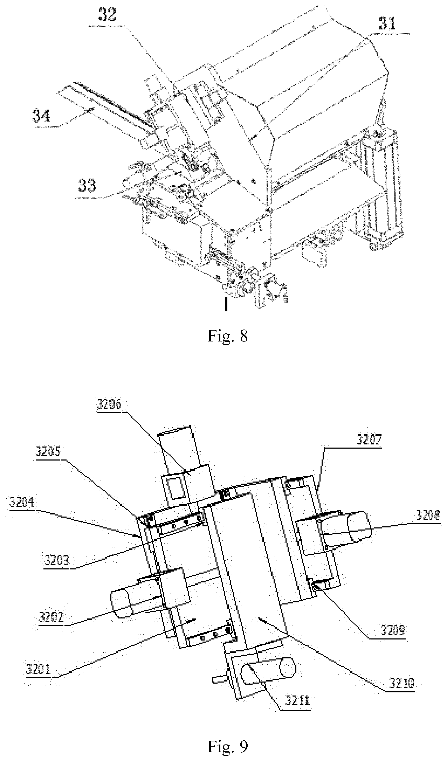

The embodiment relates to an angle clearance-free welding method for processing a seamless welding angle as shown in Fig.4 which does not form part of the present invention. The embodiment further discloses a double-head cutting saw (as shown in Fig.5 to Fig.8) with an automatic processing function in the above process for cutting the section bar. The double-head cutting saw includes a lathe bed 1, a fixed saw head 2, a movable saw head 3, an electric box 4, an operation box 5 and a computer control console 6; the fixed saw head 2 is fixed at one end of the lathe bed 1, and the movable saw head 3 moves along a slide rail on the lathe bed 1; the computer control console 6 is connected with the operation box 5; the operation box 5 is connected with the electric box 4; the movement of the fixed saw head 2 and the movable saw head 3 is controlled by the electric box 4; the movable saw head 3 includes a saw cutting center 31, a processing center 32, a locating and clamping mould 33 and a worktable; the locating and clamping mould 33 clamps and fixes a section bar 34 needing to be processed on the worktable, and the saw cutting center 31 horizontally saws and cuts the end face of the section bar; and the processing center 32 mills the outer contour of the cut end face of the section bar.

In the embodiment, the processing center 32 is arranged in each of the fixed saw head 2 and the movable saw head 3; the processing center 32 includes an X direction bottom plate 3201, an X direction servo motor and feed screw nut 3202, an X direction guide rail and slide block 3203, a Y direction bottom plate 3204, a Y direction guide rail and slide block 3205, a Y direction servo motor and feed screw nut 3206, a Z direction bottom plate 3207, a Z direction servo motor and feed screw nut 3208, a Z direction guide rail and slide block 3209, a sliding plate 3210 and a power head and cutter 3211.
The connection relationship of the above components is as follows: the power head and cutter 3211 is installed on the sliding plate 3210; the X direction guide rail and slide block 3203 is installed on the X direction bottom plate 3201; the X direction servo motor and feed screw nut 3202 drives the sliding plate 3210 to move in an X direction under the guide of the X direction guide rail and slide block 3203; the Y direction bottom plate 3204 is installed under the X direction bottom plate 3201; the Y direction guide rail and slide block 3205 is installed on the Y direction bottom plate 3204; the Y direction servo motor and feed screw nut 3206 drives the sliding plate 3210 to move in a Y direction under the guide of the Y direction guide rail and slide block 3205; the Z direction bottom plate 3207 is installed on the side face of the Y direction bottom plate 3204; the Z direction guide rail and slide block 3209 is installed on the Z direction bottom plate 3207; and the Z direction servo motor and feed screw nut 3208 drives the sliding plate 3210 to move in a Z direction under the guide of the Z direction guide rail and slide block 3209.
The working process of the double-head cutting saw in the embodiment is as follows: the movable saw head 3 moves to a corresponding position of the lathe bed 1 according to a required length, then the locating and clamping mould 33 in the fixed saw head 2 and the movable saw head 3 presses and locates the section bar to be processed on the worktable, the saw cutting center 31 cuts the end face of the section bar according to cutting requirements of the end face of the section bar, the processing center 32 mills the outer contour of the section bar according to outer contour data of the section bar calculated by the computer control console 6, and the processing center 32 guarantees whole-space accurate processing of the outer contour at various angles in various direction via three-axis linkage.

A processing method of the double-head cutting saw with the automatic processing function for processing the outer contour of the section bar includes the following steps:
(1) inputting a sectional view of a section bar to be cut into the control device, actively extracting the outer contour of the section bar to be cut through a computing center in the control device, and generating an outer contour processing procedure of the double-head cutting saw;
(2) starting the double-head cutting saw for saw cutting, and locating and pressing the section bar on the worktable through the locating and clamping mould in the double-head cutting saw, wherein the entire cutting off, saw cutting and end face milling process of the section bar is located at a pressed state;
(3) cutting: using the saw cutting center to cut the section bar into a section bar conforming to a required length, then removing scrap materials dropping in the cutting process of the section bar and the remaining uncut material having entire segments, only retaining the section bar conforming to the length requirement and having an end face to be further processed, and leaving a corresponding space for the participation of the processing center for subsequent processing;
(4) cutting the outer contour of the end face: driving the power head and cutter in the processing center to move along the outer contour line of the section bar by means of the servo motors and the feed screw nuts to mill the outer contour of the end face;
(6) loosening the locating and clamping mould after cutting the outer contour of the end face, and taking out the material; and
(7) feeding the material again, and repeating the above process.

## Claims

1. A double-head cutting saw with an automatic processing function, for use in an angle clearance-free welding method for uPVC doors and windows, the double-head cutting saw comprising a fixed saw head (2) and a movable saw head (3), **characterized in that** processing centers (32) are arranged in both of the fixed saw head (2) and the movable saw head (3);
the processing center (32) comprises an X direction bottom plate (3201), an X direction servo motor and feed screw nut (3202), an X direction guide rail and slide block (3203), a Y direction bottom plate (3204), a Y direction guide rail and slide block (3205), a Y direction servo motor and feed screw nut (3206), a Z direction bottom plate (3207), a Z direction servo motor and feed screw nut (3208), a Z direction guide rail and slide block (3209), a sliding plate (3210) and a power head and cutter (3211);
the power head and cutter (3211) is installed on the sliding plate (3210); the X direction guide rail and slide block (3203) is installed on the X direction bottom plate (3201); the X direction servo motor and feed screw nut (3202) drives the sliding plate (3210) to move in an X direction under the guide of the X direction guide rail and slide block (3203);
the Y direction bottom plate (3204) is installed under the X direction bottom plate (3201); the Y direction guide rail and slide block (3205) is installed on the Y direction bottom plate (3204); the Y direction servo motor and feed screw nut (3206) drives the sliding plate (3210) to move in a Y direction under the guide of the Y direction guide rail and slide block (3205); and
the Z direction bottom plate (3207) is installed on the side face of the Y direction bottom plate (3204); the Z direction guide rail and slide block (3209) is installed on the Z direction bottom plate (3207); and the Z direction servo motor and feed screw nut (3208) drives the sliding plate (3210) to move in a Z direction under the guide of the Z direction guide rail and slide block (3209).

2. The double-head cutting saw with the automatic processing function of claim 1, comprising: a lathe bed (1), the fixed saw head (2), the movable saw head (3), an electric box (4) and a control device;
the fixed saw head (2) is fixed at one end of the lathe bed (1), and the movable saw head (3) moves along a slide rail on the lathe bed (1); the control device is connected with the electric box (4), a command sent by the control device is transmitted to the fixed saw head (2) and the movable saw head (3) through the electric box (4) to control the start, stop and movement of the fixed saw head (2) and the movable saw head (3);
each of the fixed saw head (2) and the movable saw head (3) comprises a saw cutting center (31), the processing center (32), a locating and clamping mould (33) and a worktable; the locating and clamping mould (33) clamps and fixes a section bar (34) needing to be processed on the worktable, and the saw cutting center (31) horizontally saws and cuts the end face of the section bar; the processing center (32) mills the outer contour of the cut end face of the section bar; the cutter in the power head and cutter (3211) is perpendicular to a saw blade in the saw cutting center (31), and when cutting at different angles, the cutter is consistently perpendicular to the cut surface.

3. The double-head cutting saw with the automatic processing function of claim 2, wherein the control device comprises an operation box (5) and/or a computer control console (6).

4. A processing method of the double-head cutting saw with the automatic processing function of claim 2, wherein the specific steps of the method are as follows:
(1) inputting a sectional view of a section bar to be cut into the control device, actively extracting the outer contour of the section bar to be cut through a computing center in the control device, and generating an outer contour processing procedure of the double-head cutting saw;
(2) starting the double-head cutting saw for saw cutting, and locating and pressing the section bar on the worktable through the locating and clamping mould in the double-head cutting saw, wherein the entire cutting off, saw cutting and end face milling process of the section bar is located at a pressed state;
(3) cutting: using the saw cutting center to cut the section bar into a section bar conforming to a required length, then removing scrap materials dropping in the cutting process of the section bar and the remaining uncut material having entire segments, only retaining the section bar conforming to the required length and having an end face to be further processed, and leaving a corresponding space for the participation of the processing center for subsequent processing;
(4) cutting the outer contour of the end face: driving the power head and cutter in the processing center to move along the outer contour line of the section bar by means of the servo motors and the feed screw nuts to mill the outer contour of the end face;
(6) loosening the locating and clamping mould after cutting the outer contour of the end face, and taking out the material; and
(7) feeding the material again, and repeating the above process.

## Patentansprüche

1. Doppelgehrungsschneidsäge mit automatischer Bearbeitungsfunktion zur Verwendung in einem winkelspielfreien Schweißverfahren für uPVC-Türen und - Fenster, wobei die Doppelgehrungsschneidsäge einen fixen Sägekopf (2) und einen beweglichen Sägekopf (3) umfasst, **dadurch gekennzeichnet, dass**
Bearbeitungszentren (32) sowohl im fixen Sägekopf (2) als auch im beweglichen Sägekopf (3) angeordnet sind;
das Bearbeitungszentrum (32) eine Bodenplatte (3201) für X-Richtung, einen Servomotor und Vorschubspindelmutter (3202) für X-Richtung, eine Führungsschiene und Gleitklotz (3203) für X-Richtung, eine Bodenplatte (3204) für Y-Richtung, eine Führungsschiene und Gleitklotz (3205) für Y-Richtung, einen Servomotor und Vorschubspindelmutter (3206) für Y-Richtung, eine Bodenplatte (3207) für Z-Richtung, einen Servomotor und Vorschubspindelmutter (3208) für Z-Richtung, eine Führungsschiene und Gleitklotz (3209) für Z-Richtung, eine Gleitplatte (3210) und einen Antriebskopf mit Schneidwerkzeug (3211) umfasst;
der Antriebskopf mit Schneidwerkzeug (3211) auf der Gleitplatte (3210) installiert ist; die Führungsschiene und Gleitklotz (3203) für X-Richtung auf der Bodenplatte (3201) für X-Richtung installiert ist; der Servomotor und Vorschubspindelmutter (3202) für X-Richtung die Gleitplatte (3210) so antreibt, dass sie sich unter der Führung durch die Führungsschiene und Gleitklotz (3202) für X-Richtung in eine X-Richtung bewegt;
die Bodenplatte (3204) für Y-Richtung unter der Bodenplatte (3201) für X-Richtung installiert ist; die Führungsschiene und Gleitklotz (3205) für Y-Richtung auf der Bodenplatte (3204) für Y-Richtung installiert ist; der Servomotor und Vorschubspindelmutter (3206) für Y-Richtung die Gleitplatte (3210) so antreibt, dass sie sich unter der Führung durch die Führungsschiene und Gleitklotz (3205) für Y-Richtung in eine Y-Richtung bewegt; und
die Bodenplatte (3207) in Z-Richtung auf der Seitenfläche der Bodenplatte (3204) für Y-Richtung installiert ist; die Führungsschiene und Gleitklotz (3209) für Z-Richtung auf der Bodenplatte (3207) für Z-Richtung installiert ist; und der Servomotor und Vorschubspindelmutter (3208) für Z-Richtung die Gleitplatte (3210) so antreibt, dass sie sich unter der Führung durch die Führungsschiene und Gleitklotz (3209) für Z-Richtung in eine Z-Richtung bewegt.

2. Doppelgehrungsschneidsäge mit der automatischen Bearbeitungsfunktion nach Anspruch 1, die umfasst: ein Drehmaschinenbett (1), den fixen Sägekopf (2), den beweglichen Sägekopf (3), einen Elektrokasten (4) und eine Steuervorrichtung;
der fixe Sägekopf (2) ist an einem Ende des Drehmaschinenbetts (1) fixiert und der bewegliche Sägekopf (3) bewegt sich entlang einer Gleitschiene auf dem Drehmaschinenbett (1); die Steuervorrichtung ist mit dem Elektrokasten (4) verbunden, ein von der Steuervorrichtung gesendeter Befehl wird über den Elektrokasten (4) an den fixen Sägekopf (2) und den beweglichen Sägekopf (3) gesendet, um das Starten, das Stoppen und die Bewegung des fixen Sägekopfs (2) und des beweglichen Sägekopfs (3) zu steuern;
der fixe Sägekopf (2) und der bewegliche Sägekopf (3) umfassen jeweils ein Sägeschneidzentrum (31), das Bearbeitungszentrum (32), ein Positionierungs- und Klemmformteil (33) und einen Arbeitstisch; das Positionierungs- und Klemmformteil (33) klemmt und fixiert einen Schnittbalken (34), der auf dem Arbeitstisch zu bearbeiten ist, und das Sägeschneidzentrum (31) sägt und schneidet die Stirnfläche des Schnittbalkens horizontal; das Bearbeitungszentrum (32) fräst die Außenkontur der geschnittenen Stirnfläche des Schnittbalkens; das Schneidwerkzeug im Antriebskopf mit Schneidwerkzeug (3211) ist normal zu einem Sägeblatt im Sägeschneidzentrum (31) und beim Schneiden in unterschiedlichen Winkeln ist das Schneidwerkzeug kontinuierlich normal zur Schneidfläche.

3. Doppelgehrungsschneidsäge mit der automatischen Bearbeitungsfunktion nach Anspruch 2, wobei die Steuervorrichtung einen Bedienkasten (5) und/oder eine Computersteuerkonsole (6) umfasst.

4. Bearbeitungsverfahren für die Doppelgehrungsschneidsäge mit der automatischen Bearbeitungsfunktion nach Anspruch 2, wobei die spezifischen Schritte des Verfahrens wie folgt sind:
(1) Eingeben einer Schnittansicht eines zu schneidenden Schnittbalkens in die Steuervorrichtung, aktives Extrahieren der Außenkontur des zu schneidenden Schnittbalkens durch ein Rechenzentrum in der Steuervorrichtung und Erstellen einer Außenkonturbearbeitungsverfahrensweise für die Doppelgehrungsschneidsäge;
(2) Starten der Doppelgehrungsschneidsäge zum Sägeschneiden und Positionieren und Pressen des Schnittbalkens mithilfe des Positionierungs- und Klemmformteils in der Doppelgehrungsschneidsäge auf dem Arbeitstisch, wobei der gesamte Abschneide-, Sägeschneide- und Stirnflächenfräsungsprozess für den Schnittbalken in einem gepressten Zustand erfolgt;
(3) Schneiden: unter Verwendung des Sägeschneidzentrums zum Schneiden des Schnittbalkens in einen Schnittbalken, der einer erforderlichen Länge entspricht, danach Entfernen von Spanmaterial, das im Schneidprozess des Schnittbalkens abfällt, und des restlichen nicht geschnittenen Materials mit ganzen Segmenten, Behalten nur des Schnittbalkens, der der erforderlichen Länge entspricht und eine weiterzubearbeitende Stirnfläche aufweist, und Lassen eines entsprechenden Raums für die Teilnahme des Bearbeitungszentrums an einer darauffolgenden Bearbeitung;
(4) Schneiden der Außenkontur der Stirnfläche: Betreiben des Antriebskopfs mit Schneidwerkzeug im Bearbeitungszentrum so, dass er sich entlang der Außenkonturlinie des Schnittbalkens bewegt, mithilfe der Servomotoren und der Vorschubspindelmuttern, um die Außenkontur der Stirnfläche zu fräsen;
(6) Lockern des Positionierungs- und Klemmformteils nach Schneiden der Außenkontur der Stirnfläche und Herausnehmen des Materials; und
(7) erneutes Zuführen des Materials und Wiederholen des obigen Prozesses.

## Revendications

1. Scie de coupe à double tête avec fonction de traitement automatique, destinée à être utilisée dans un procédé de soudage sans angle de dépouille pour fenêtres et portes en PVC non plastifié, la scie de coupe à double tête comprenant une tête de scie fixe (2) et une tête de scie mobile (3),
**caractérisée par le fait que** des centres de traitement (32) sont disposés dans la tête de scie fixe (2) et dans la tête de scie mobile (3) ;
le centre de traitement (32) comprend une plaque inférieure de direction X (3201), un écrou de vis d'avance et servomoteur de direction X (3202), un bloc glissière et rail de guidage de direction X (3203), une plaque inférieure de direction Y (3204), un bloc glissière et rail de guidage de direction Y (3205), un écrou de vis d'avance et servomoteur de direction Y (3206), une plaque inférieure de direction Z (3207), un écrou de vis d'avance et servomoteur de direction Z (3208), un bloc glissière et rail de guidage de direction Z (3209), une plaque coulissante (3210) et un élément de coupe et moteur (3211) ;
l'élément de coupe et moteur (3211) est installé sur la plaque coulissante (3210) ; le bloc glissière et rail de guidage de direction X (3203) est installé sur la plaque inférieure de direction X (3201) ; l'écrou de vis d'avance et servomoteur de direction X (3202) entraîne la plaque coulissante (3210) en mouvement dans une direction X avec le guidage par le bloc glissière et rail de guidage de direction X (3203) ;
la plaque inférieure de direction Y (3204) est installée sous la plaque inférieure de direction X (3201) ; le bloc glissière et rail de guidage de direction Y (3205) est installé sur la plaque inférieure de direction Y (3204) ; l'écrou de vis d'avance et servomoteur de direction Y (3206) entraîne la plaque coulissante (3210) en mouvement dans une direction Y avec le guidage par le bloc glissière et rail de guidage de direction Y (3205) ; et
la plaque inférieure de direction Z (3207) est installée sur la face latérale de la plaque inférieure de direction Y (3204) ; le bloc glissière et rail de guidage de direction Z (3209) est installé sur la plaque inférieure de direction Z (3207) ; et l'écrou de vis d'avance et servomoteur de direction Z (3208) entraîne la plaque coulissante (3210) en mouvement dans une direction Z avec le guidage par le bloc glissière et rail de guidage de direction Z (3209).

2. Scie de coupe à double tête avec fonction de traitement automatique selon la revendication 1, comprenant : un banc de tour (1), la tête de scie fixe (2), la tête de scie mobile (3), un boîtier électrique (15) et un dispositif de commande ;
la tête de scie fixe (2) est fixée au niveau d'une extrémité du banc de tour (1), et la tête de scie mobile (3) se déplace le long d'un rail de glissière sur le banc de tour (1) ; le dispositif de commande est relié au boîtier électrique (4), une instruction envoyée par le dispositif de commande est transmise à la tête de scie fixe (2) et à la tête de scie mobile (3) par l'intermédiaire du boîtier électrique (4) pour commander le démarrage, l'arrêt et le mouvement de la tête de scie fixe (2) et de la tête de scie mobile (3) ;
chacune de la tête de scie fixe (2) et de la tête de scie mobile (3) comprend un centre de coupe à la scie (31), le centre de traitement (32), un moule de positionnement et de serrage (33) et une table de travail ; le moule de positionnement et de serrage (3) serre et fixe une barre de section (34) à traiter sur la table de travail, et le centre de coupe à la scie (31) scie et coupe horizontalement la face d'extrémité de la barre de section ; le centre de traitement (32) fraise le contour externe de la face d'extrémité coupée de la barre de section ; l'élément de coupe dans l'élément de coupe et moteur (3211) est perpendiculaire à une lame de scie dans le centre de coupe à la scie (31) et, lorsqu'il coupe à des angles différents, l'élément de coupe est toujours perpendiculaire à la surface coupée.

3. Scie de coupe à double tête avec fonction de traitement automatique selon la revendication 2, dans laquelle le dispositif de commande comprend un boîtier d'actionnement (5) et/ou une console de commande informatique (6).

4. Procédé de traitement de la scie de coupe à double tête avec fonction de traitement automatique selon la revendication 2, dans lequel les étapes spécifiques du procédé sont les suivantes :
(1) entrer une vue en coupe d'une barre de section à couper dans le dispositif de commande, extraire de manière active le contour externe de la barre de section à couper par l'intermédiaire d'un centre de calcul dans le dispositif de commande, et générer une procédure de traitement de contour externe de la scie de coupe à double tête ;
(2) démarrer la scie de coupe à double tête pour réaliser une coupe à la scie, et positionner et presser la barre de section sur la table de travail par l'intermédiaire du moule de positionnement et de serrage dans la scie de coupe à double tête, la totalité du processus de coupe, de coupe à la scie et de fraisage de face d'extrémité de la barre de section étant dans un état pressé ;
(3) couper : utiliser le centre de coupe à la scie pour couper la barre de section en une barre de section se conformant à une longueur requise, puis retirer les matières de déchet tombant pendant le processus de coupe de la barre de section et la matière non coupée restante ayant des segments entiers, retenir uniquement la barre de section se conformant à la longueur requise et ayant une face d'extrémité à traiter ultérieurement, et laisser un espace correspondant pour la participation du centre de traitement en vue du traitement ultérieur ;
(4) couper le contour externe de la face d'extrémité : amener l'élément de coupe et moteur dans le centre de traitement à se déplacer le long de la ligne de contour externe de la barre de section au moyen des servomoteurs et des écrous de vis d'avance pour fraiser le contour externe de la face d'extrémité ;
(6) desserrer le moule de positionnement et de serrage après avoir coupé le contour externe de la face d'extrémité, et retirer le matériau ; et
(7) réalimenter le matériau, et répéter le traitement ci-dessus.
